**Europäisches Patentamt**

**European Patent Office**

**Office européen des brevets**

(19)

(11) Veröffentlichungsnummer: **0 201 535**
**B1**

(12) # EUROPÄISCHE PATENTSCHRIFT

(45) Veröffentlichungstag der Patentschrift:
**31.05.89**

(21) Anmeldenummer: **85905405.8**

(22) Anmeldetag: **22.10.85**

(86) Internationale Anmeldenummer:
**PCT/EP 85/00558**

(87) Internationale Veröffentlichungsnummer:
**WO 86/03061 (22.05.86 Gazette 86/11)**

(51) Int. Cl.⁴: **H 01 M 2/36**

(54) **BATTERIE-FÜLLSTOPFEN.**

(30) Priorität: **09.11.84 DE 3441006**
**03.05.85 CA 480759**

(43) Veröffentlichungstag der Anmeldung:
**20.11.86 Patentblatt 86/47**

(45) Bekanntmachung des Hinweises auf die Patenterteilung:
**31.05.89 Patentblatt 89/22**

(84) Benannte Vertragsstaaten:
**AT BE CH DE FR GB IT LI LU NL SE**

(56) Entgegenhaltungen:
**WO-A-83/00260**
**CH-A-460 882**
**FR-A-2 525 821**
**GB-A-2 011 157**
**US-A-1 791 152**
**US-A-2 339 642**
**US-A-2 680 773**
**US-A-3 082 286**
**US-A-3 318 345**
**US-A-4 154 904**

(73) Patentinhaber: **Oschmann, Klaus, Mitterweg 9,**
**D-8066 Bergkirchen (DE)**

(72) Erfinder: **Oschmann, Klaus, Mitterweg 9, D-8066**
**Bergkirchen (DE)**

(74) Vertreter: **Gustorf, Gerhard, Dipl.- Ing.,**
**Patentanwalt Dipl.- Ing. Gerhard Gustorf**
**Bachstrasse 6 A, D-8300 Landshut (DE)**

## Beschreibung

Die Erfindung betrifft einen Füllstopfen zum automatischen Einfüllen von Wasser in Batteriezellen, welcher an einem Stopfengehäuse Befestigungsorgane für die Halterung in der Nachfüllöffnung der Batteriezelle sowie einen Anschlußstutzen für die Wasserzufuhr ausweist.

Bei einem derartigen Füllstopfen, der in der DE-C-3 127 619 beschrieben und dargestellt ist, sind einstückig mit dem Stopfengehäuse federnde Zungen ausgebildet, deren untere Enden nach außen weisende Vorspünge haben, die nach dem Einsetzen des Stopfengehäuses die Unterkante der Nachfüllöffnung der Batteriezelle elastisch hintergreifen

Bei einem aus der US-A-1 942 908 bekannten Füllstopfen ist ein Gewinde als Befestigungsorgan vorgesehen, welches ebenfalls einstückig mit dem Stopfengehäuse ausgebildet ist.

Gegenstand der US-A 2 339 642 ist ein Nachfüllbehälter für Batteriezellen, der von einem vertikalen Rohr durchsetzt ist, das Luft- und Wasserkanäle enthält. Auf das untere Ende des Rohres ist eine austauschbare Gewindebuchse aufgeschraubt, deren Außengewinde dem Anschlußgewinde der Nachfüllöffnung der Batteriezelle entspricht.

Der Erfindung liegt die Aufgabe zugrunde, den Füllstopfen der eingangs umrissenen Bauart so zu verbessern, daß er für die unterschiedlichsten Batteriezellen universell verwendet und rasch an diese angepaßt werden kann, ohne für jede Batteriezellen-Bauart einen anderen Füllstopfen bereitstellen zu müssen.

Gemäß der Erfindung wird diese Aufgabe bei dem gattungsgemäßen Füllstopfen dadurch gelöst, daß auf das untere Ende des Stopfengehäuses eine die Befestigungsorgane aufweisende Hülse aufgesetzt ist, die über eine Schnappverbindung am Stopfengehäuse gehalten und relativ zu diesem drehbar ist.

Mit dieser Lösung ist es möglich, einen einheitlichen Füllstopfen für alle vorkommenden Nachfüllöffnungen an Batteriezellen herzustellen, auf dessen unteres Ende lediglich die jeweilige Hülse rasch montierbar aufgesetzt werden muß, deren Befestigungsorgane an die Abmessungen der Nachfüllöffnung angepaßt sind. Auf diese Weise sind bisher verwendete Adapter entbehrlich, deren Einsatz den Nachteil hat, daß die Einbauhöhe des Füllstopfens für viele Anwendungsfälle zu groß ist. Außerdem werden durch den Einsatz eines Adapters der konstruktiv mögliche Durchmesser des Schwimmers und damit der Auftrieb beträchtlich verringert. Durch die Verdrehbarkeit der Hülse auf dem Stopfengehäuse können die Anschlußstutzen für die Wasserzufuhr und die Verbindungsschläuche zueinander ausgerichtet werden, ohne daß die Schläuche oder dgl. starke Krümmungen oder Knicke erhalten. Außerdem können auch Batterien mit extrem nahe beieinanderliegenden Polanschlüssen mit dem erfindungsgemäßen Füllstopfen ausgerüstet werden.

Die an der Hülse ausgebildeten Befestigungsorgane können aus einem Gewinde oder aus einem Renkanschluß bestehen.

Es ist besonders günstig, wenn das Stopfengehäuse ein Fenster aufweist, durch das hindurch eine Füllstandsanzeige sichtbar ist.

Dabei ist es vorteilhaft, wenn das Fenster in der Seitenwand des Stopfengehäuses vorgesehen ist. Diese Lösung hat gegenüber der Anordnung des Fensters im Deckel des Stopfengehäuses den Vorzug, daß die Innenwand des Fensters immer klar bleibt, weil an deren senkrechter Fläche Kondenswasser leicht abfließt, ohne sich abzusetzen und dadurch die Durchsichtigkeit des Fensters zu beeinträchtigen.

Das Stopfengehäuse kann eine verschließbare Entnahmeöffnung für Flüssigkeitsproben aufweisen, etwa, um den Säuregehalt des Wassers in der Batteriezelle zu prüfen.

Wenn hinter dem im Stopfengehäuse liegenden und mit dem Anschlußstutzen verbundenen Eintrittskanal eine labyrinthförmige Wasserführung vorgesehen ist, deren Eingang tiefer als der Kanalausgang liegt, werden dadurch ein Schlagwetterschutz und eine Wasservorlage gebildet, die verhindert, daß im Fall eines entstehenden Vakuums im an die Anschlußstutzen angeschlossenen Schlauchsystem Wasser aus dem Stopfengehäuse abgesaugt werden kann.

Die Erfindung ist nachstehend an Ausführungsbeispielen erläutert, die in der Zeichnung dargestellt sind.

Es zeigen:

Figur 1    eine perspektivische Ansicht eines Füllstopfens gemäß der Erfindung,

Figur 2    einen Längsschnitt durch einen ähnlich ausgebildeten Füllstopfen,

Figur 3    die teilweise geschnittene Ansicht eines abgeänderten Ausführungsbeispiels,

Figur 4    einen vergrößerten Längsschnitt eines Eintrittskanals und

Figur 5 die Schnittdarstellung eines Füllstopfens mit Entnahmeöffnung.

Der allgemein mit 10 bezeichnete Füllstopfen zum automatischen Einfüllen von Wasser in Batteriezellen hat ein zylindrisches Stopfengehäuse 12, dessen unteres Ende 14 einen geringeren Durchmesser als das Oberteil 16 aufweist und in eine Nachfüllöffnung einer nicht gezeigten Batteriezelle eingesetzt werden kann.

Für die Wasserzuführung von einem nicht gezeigten Vorratsbehälter ist am Oberteil 16 des Stopfengehäuses 12 ein T-förmiger Anschlußstutzen 20 vorgesehen, der zwei Anschlußnippel 22 und 24 hat, auf die in bekannter Weise Wasserschläuche aufgesteckt werden können. Der Anschlußnippel 22 dient zur Zuführung von chemisch reinem Wasser, während der Anschlußnippel 24 das zugeführte und nicht in den dargestellten Füllstopfen 10 abgeleitete Wasser zum nächsten Füllstopfen weiterleitet. Die Wasserführung kann jedoch auch in der umgekehrten Richtung, d. h. zunächst zum Anschlußnippel 24, erfolgen.

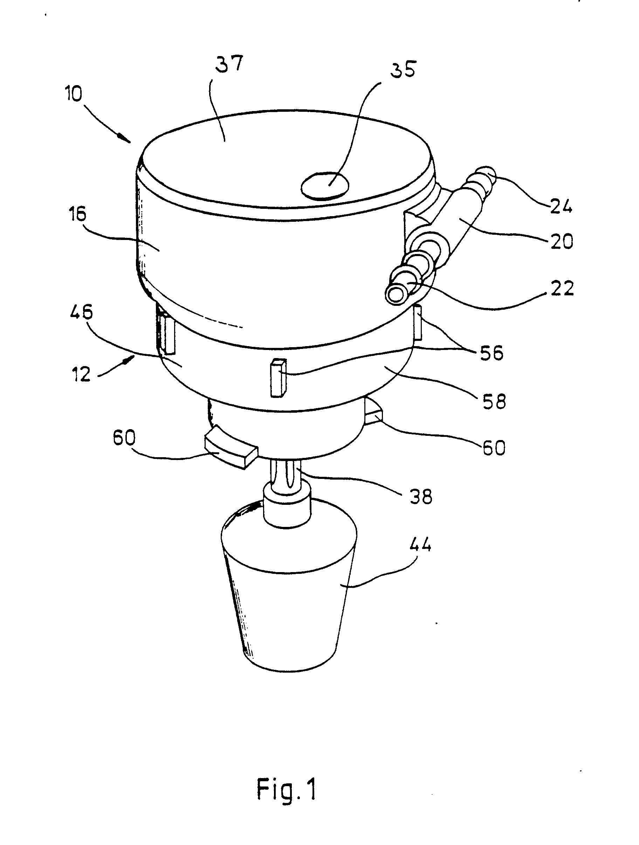

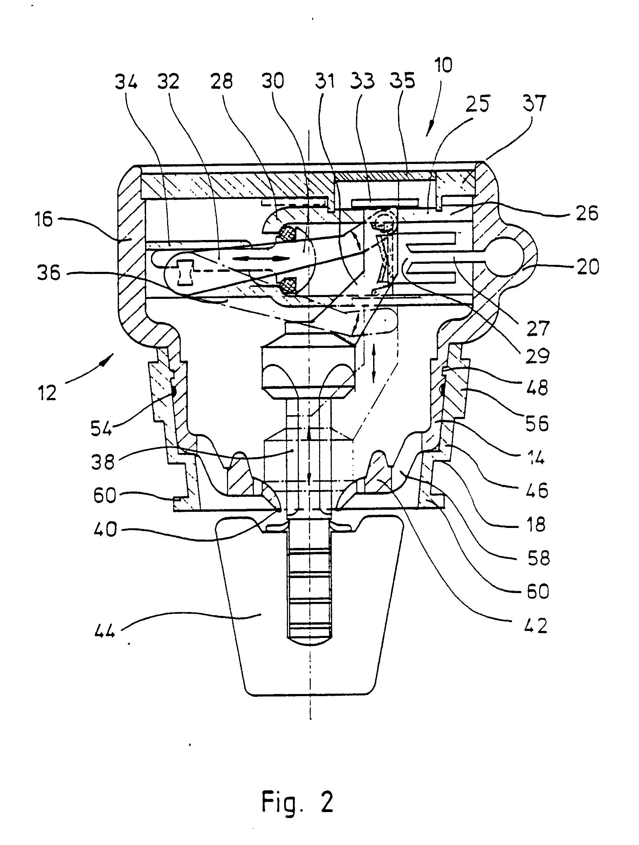

Bei dem in den Figuren 1 und 2 gezeigten Ausführungsbeispiel ist der Fuß 25 des T-förmigen Anschlußstutzens 20 in ein Einlaßrohrstuck 26 eingesetzt, das im mittleren Bereich ein konische Sitzfläche 28 für ein Ventil 30 hat, dessen Schaft 32 horizontal verschiebbar in einer Führung 34 des Einlaßrohrstückes 26 gelagert ist. In den Fuß 25 ist ein Eintrittskanal 27 mit einem Durchmesser von etwa 1,2 mm eingearbeitet, dessen Ausgang 29 trompetenförmig erweitert ist.

Der Schaft 32 des Ventils 30 ist über einen Getriebe-Verstärkungshebel 36 mit einer Führungsstange 38 verbunden, die zentrisch im Stopfengehäuse 12 gelagert ist und durch eine kreisförmige Öffnung 40 im Boden 42 des Stopfengehäuses 12 aus diesem herausragt. Auf das untere Ende der Führungsstange 38 ist ein Schwimmer 44 aufgesetzt.

In Abhängigkeit von dem Füllstand der jeweiligen Batteriezelle wird über den Schwimmer 44, den Verstärkungshebel 36 und das Ventil 30 die Nachfüllung des von einem Druckbehälter zugeführten Wassers in die Batteriezelle gesteuert.

Das obere Ende eines von der Führungsstange 38 abstehenden Armes 31 trägt eine Anzeigescheibe 33, die in der obersten Stellung des Schwimmers 44, d. h. bei geschlossenem Ventil 30, durch ein Fenster 35 im Deckel 37 des Stopfengehäuses 12 sichtbar ist.

Auf das untere Ende 14 des Stopfengehäuses 12 ist eine zylindrische Hülse 46 aus Kunststoff aufgepreßt. Zur Befestigung ist an der Innenwand der Hülse 46 ein Wulst 48 ausgebildet, der im fertig montierten Zustand in eine Umfangsnut 50 des unteren Endes 14 des Stopfengehäuses 12 nach Art einer Schnappverbindung eingreift. Als Abdichtung dient ein in eine weitere Umfangsnut 52 des unteren Endes 14 des Stopfengehäuses 12 eingesetzter Dichtring 54. Die beschriebene und dargestellte Befestigung erlaubt nicht nur ein rasches Aufsetzen der Hülse 46 auf das Stopfengehäuse 12, sondern auch ein Verdrehen des Stopfengehäuses 12 in der Hülse 46. An der Außenseite der Hülse 46 ausgebildete Griffleisten 56 erleichtern ein Drehen der Hülse 46 beim Ausbau des Füllstopfens 10.

Am unteren, verjüngten Ende 58 der Hülse 46 sind im in den Figuren 1 und 2 gezeigten Ausführungsbeispiel zwei diametral gegenüberliegende, flanschartige Renkanschlußelemente 60 ausgebildet, mit deren Hilfe der gesamte Füllstopfen 10 in eine korrespondierende Renkverbindungselemente aufweisende Bohrung der Nachfüllöffnung der Batteriezelle eingesetzt werden kann.

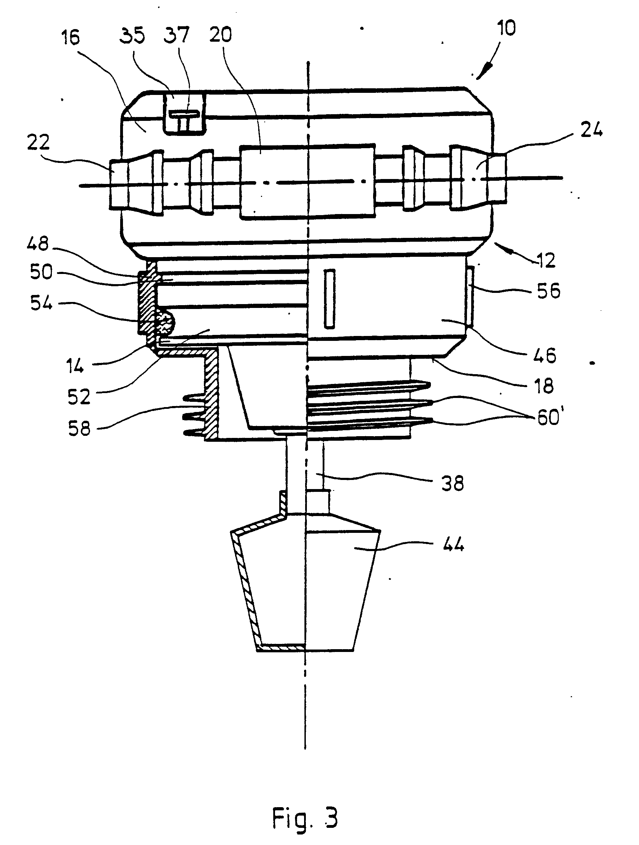

Die Variante der Figur 3 zeigt eine Hülse 46, an deren unterem Ende 58 ein vollständiges Außengewinde 60' ausgebildet ist, das in eine Gewindebohrung der Nachfüllöffnung der Batteriezelle eingeschraubt werden kann. Im eingeschraubten Zustand des Füllstopfens 10 sitzt der Ringbereich 18 der Hülse 46, der deren verjüngtes Ende 58 mit deren oberem Teil verbindet, auf der Zellenoberfläche auf.

Außerdem ist bei diesem Ausführungsbeispiel das Fenster 35, durch das hindurch der Stand der Anzeigescheibe 33 kontrolliert werden kann, in der Seitenwand des Oberteils 6 des Stopfengehäuses 12 vorgesehen.

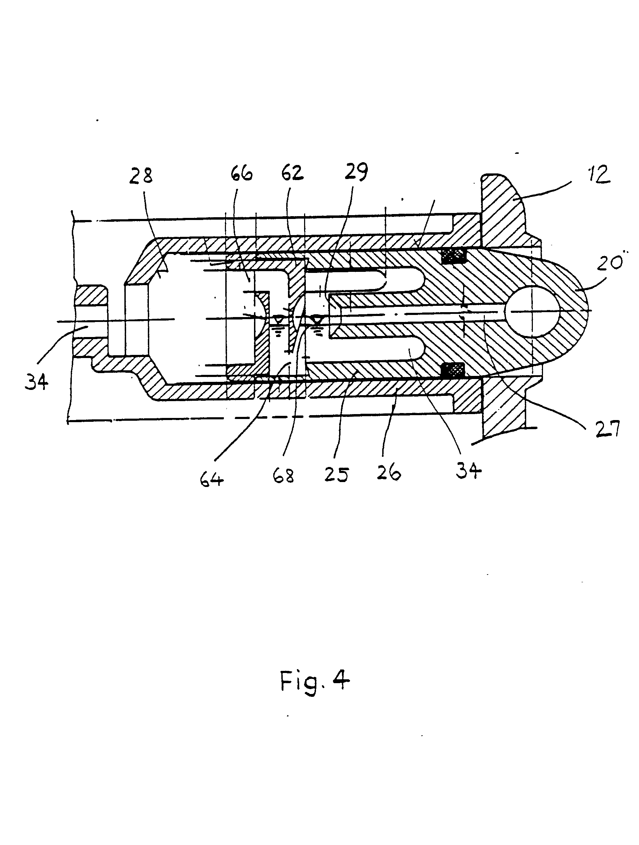

Figur 4 zeigt im Längsschnitt eine bevorzugte Ausbildung des Eintrittskanals 27. Dabei ist in Strömungsrichtung hinter dem Kanalausgang 29 eine labyrinthförmige Wasserführung vorgesehen, die durch einen Labyrinthkanal-Einsatz 62 gebildet ist, dessen Eingang 64 tiefer als der Kanalausgang 29 liegt, während dessen Ausgang 66 höher angeordnet ist. Dadurch wird eine durch 68 angedeutete Wasservorlage gebildet, die im Fall eines Vakuums im Schlauchsystem, das an den Anschlußstutzen 20 angeschlossen ist, nicht abgesaugt werden kann.

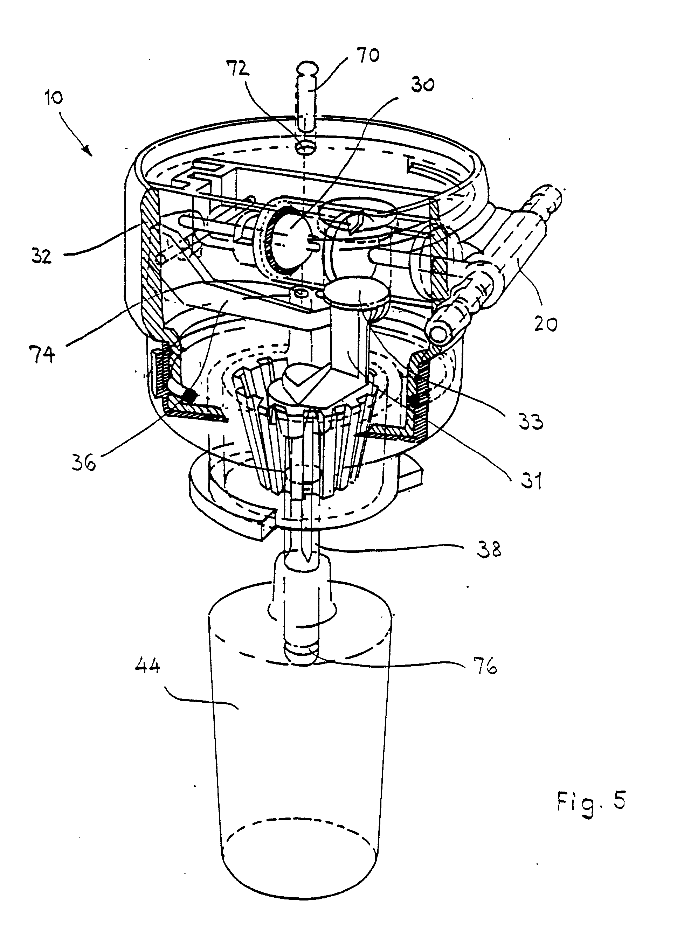

Das Beispiel der Figur 5 zeigt ein Stopfengehäuse 12 mit einer durch einen Stopfen 70 verschließbaren Entnahmeöffnung 72, die als durchgehender Kanal 74 ausgebildet ist. Dadurch besteht die Möglichkeit, mittels eines Saughebers oder dgl. Wasser zu entnehmen, etwa um den Säuregehalt überprüfen zu können.

Die Figur 5 zeigt ferner, daß der Schwimmer 44 mit Schnappsitz 76 an der Führungsstange 38 befestigt ist, so daß er von dieser abgenommen werden kann.

Als Werkstoff für die Hülse 46 und für das Stopfengehäuse 12 haben sich Polykarbonate als besonders vorteilhaft erwiesen.

**Patentansprüche**

1. Füllstopfen zum automatischen Einfüllen von Wasser in Batteriezellen, welcher an einem Stopfengehäuse Befestigungsorgane für die Halterung in der Nachfüllöffnung der Batteriezelle sowie einen Anschlußstutzen für die Wasserzufuhr aufweist, dadurch gekennzeichnet, daß auf das untere Ende (14) des Stopfengehäuses (12) eine die Befestigungsorgane (60) aufweisende Hülse (46) aufgesetzt ist, die über eine Schnappverbindung am Stopfengehäuse (12) gehalten und relativ zu diesem drehbar ist.

2. Füllstopfen nach Anspruch 1, dadurch gekennzeichnet, daß die an der Hülse (46) ausgebildeten Befestigungsorgane ein Gewinde (60') sind.

3. Füllstopfen nach Anspruch 1, dadurch gekennzeichnet, daß die an der Hülse (46) ausgebildeten Befestigungsorgane aus einem Renkanschluß (60) bestehen.

4. Füllstopfen nach einem der vorhergehenden Ansprüche, dadurch gekennzeichnet, daß das Stopfengehäuse (12) ein Fenster (35) aufweist, durch das hindurch eine Füllstandsanzeige (33) sichtbar ist.

5. Füllstopfen nach Anspruch 4, dadurch gekennzeichnet, daß das Fenster (35) in der Seitenwand des Stopfengehäuses (12) vorgesehen ist.

6. Füllstopfen nach Anspruch 4, dadurch gekennzeichnet, daß das Fenster (35) im Deckel (37) des Stopfengehäuses (12) vorgesehen ist.

7. Füllstopfen nach einem der vorhergehenden Ansprüche, dadurch gekennzeichnet, daß das Stopfengehäuse (12) eine verschließbare Entnahmeöffnung (72) für Flüssigkeitsproben aufweist.

8. Füllstopfen nach Anspruch 7, dadurch gekennzeichnet, daß die Entnahmeöffnung (72) als durchgehender Kanal (74) ausgebildet ist.

9. Füllstopfen nach einem der vorhergehenden Ansprüche, dadurch gekennzeichnet, daß der Anschlußstutzen (20) zu einem im Stopfengehäuse (12) vorgesehenen Eintrittskanal (27) führt, hinter dem in Strömungsrichtung eine labyrinthförmige Wasserführung vorgesehen ist.

10. Füllstopfen nach Anspruch 9, dadurch gekennzeichnet, daß die labyrinthförmige Wasserführung einen gegenüber dem Ausgang (29) des Eintrittskanals (27) tiefer liegenden Eingang (64) hat.

## Claims

1. Filling plug or cup for the automatic filling of battery-cells with water the cup-housing of which is provided with means for mounting in the filling orifice of the battery-cell and with a connection for the water supply, characterized in that fitted to the lower end (14) of the cup-housing (12) is a sleeve (46) exhibiting the fixing means (60), said sleeve (46) being held to the cup-housing (12) by a snap-fastener and being rotable in relation to the cup-housing (12).

2. Filling plug or cup according to claim 1, characterized in that the fixing means on the sleeve (46) is a thread (60').

3. Filling plug or cup according to claim 1, characterized in that the fixing means on the sleeve (46) is a bayonet-fastener (60).

4. Filling plug or cup according to one of the preceding claims, characterized in that in the cup-housing (12) is provided a window (35) through which a level indicator (33) is visible.

5. Filling plug or cup according to claim 4, characterized in that said window (35) is provided in the lateral wall of the cup-housing (12).

6. Filling plug or cup according to claim 4, characterized in that said window (35) is provided in the cover (37) of the cup-housing (12).

7. Filling plug or cup according to one of the preceding claims, characterized in that the cup-housing (12) comprises a closable orifice (72) for taking liquid-samples.

8. Filling plug or cup according to claim 7, characterized in that the orifice (72) is in the form of a continuous passage (74).

9. Filling plug or cup according to one of the preceding claims, characterized in that the connection (20) leads to an inlet passage (27) which is disposed in the cup housing (12) and after which, as seen in the direction of flow, is provided a labyrinth water-supply.

10. Filling plug or cup according to claims 9, characterized in that the entry (64) to the labyrinth water-supply is lower than the exit (29) of the inlet passage (27).

## Revendications

1. Bouchon de remplissage destiné au remplissage automatique d'eau des éléments de batterie comportant sur un carter de bouchon des organes pour la fixation dans l'orifice de remplissage de l'élément de batterie ainsi qu'un raccord d'alimentation d'eau caractérisé en ce qu'on place sur l'extrémité inférieure (14) du carter de bouchon (12) un manchon (46) présentant les organes de fixation (60), qui sont tenus par une fixation à enclenchement au carter de bouchon (12) et qui peuvent tourner par rapport à celui-ci.

2. Bouchon de remplissage selon la revendication 1, caractérisé en ce que les organes de fixation formés sur le manchon (46) constituent un filetage (60').

3. Bouchon de remplissage selon la revendication 1, caractérisé en ce que les organes de fixation formés sur le manchon (46) se composent d'une fixation à baïonnette (60)

4. Bouchon de remplissage selon l'une quelconque des revendications précédentes, caractérisé en ce que le carter de bouchon (12) comporte une fenêtre (35) à travers laquelle est visible une indication (33) de niveau de remplissage.

5. Bouchon de remplissage selon la revendication 4, caractérisé en ce que la fenêtre (35) est prévue dans la paroi latérale du carter de bouchon (12).

6. Bouchon de remplissage selon la revendication 4, caractérisé en ce que la fenêtre (35) est prévue dans le couvercle (37) du carter de bouchon (12).

7. Bouchon de remplissage selon l'une quelconque des revendications précédentes, caractérisé en ce que le carter de bouchon (12) comporte un orifice de prélèvement (72) fermable pour prendre des échantillons de liquide.

8. Bouchon de remplissage selon la revendication 7, caractérisé en ce que l'orifice de prélèvement (72) est formé d'un canal continu (74).

9. Bouchon de remplissage selon l'une quelconque des revendications précédentes, caractérisé en ce que le raccord (20) conduit à un canal d'entrée (27), prévu dans le carter de bouchom (12), canal derrière lequel est prévue une conduite d'eau en labyrinthe orientée dans le sens de l'écoulement.

10. Bouchon de remplissage selon la revendication 9, caractérisé en ce que la conduite d'eau en labyrithe comporte une entrée (64) plus basse par rapport à la sortie (29) du canal d'entrée (27).

Fig.1

Fig. 2

Fig. 3

Fig. 4

Fig. 5